# DEMANDE DE BREVET EUROPEEN

(11) **EP 1 314 854 A1**
(43) Date de publication de la demande: **28.05.2003**
(21) Numéro de dépôt: 01870259.7
(22) Date de dépôt: 23.11.2001
(51) Int. Cl.: F01D 5/02

(54) **Dispositif découpleur destiné à équiper un moteur aéronautique**

(71) Demandeur: Techspace Aero S.A., 4041 Herstal (BE)
(72) Inventeur: Bos, Mathieu, 3520 Zonhoven (BE)
(74) Mandataire: Van Malderen, Joelle

(57) **Abrégé**

La présente invention se rapporte à un dispositif découpleur (1), de préférence destiné à équiper un moteur aéronautique, comprenant au moins deux brides (2,3) solidarisées par une pluralité d'éléments de fixation (4), lesdites brides constituant, avec l'ensemble des éléments de fixation (4), une ou des liaisons fusibles, lesdites liaisons fusibles étant conçues pour se rompre si les efforts radiaux exercés sur les brides (2,3) dépassent un certain seuil, caractérisé en ce que les éléments de fixation (4) des liaisons fusibles sont noyés dans des matrices (6,6'), de préférence en polymère ou élastomère, disposées à l'extrémité de chaque bride (2,3) par rapport à la liaison.

## Description

### Objet de l'invention

La présente invention se rapporte à un nouveau dispositif découpleur, dans lequel des moyens sont prévus pour la rétention de débris constitués par des morceaux de pièces mécaniques provenant d'au moins deux éléments de fixation après rupture d'un des deux éléments. La rétention des pièces doit être réalisée de préférence dans la position de montage.

L'invention concerne également un procédé de découplage utilisant ledit dispositif découpleur.

### Etat de la technique

Dans le domaine mécanique, on connaît des découpleurs ou "fusibles" qui sont des points faibles spécialement conçus pour provoquer la rupture d'une pièce ou d'un assemblage à l'endroit où ils sont disposés, lorsqu'une surcharge mécanique critique est appliquée à ladite pièce ou audit assemblage. L'utilisation de découpleurs mécaniques est connue dans la conception de machines tournantes telles que des turbines, de machines volantes, d'outils de coupe ou de forage, etc.

En particulier, un découpleur mécanique peut être un dispositif constitué d'au moins deux brides assemblées par un certain nombre de vis et d'écrous qui vont se briser en cas de surcharge. Les brides sont de ce fait appelées les liaisons fusibles.

Un découpleur est susceptible d'être utilisé dans tous les domaines nécessitant la fixation de deux ou plusieurs pièces dans une enceinte comportant des éléments rotatifs où une rupture de liaisons fusibles est possible, ou mieux a été prévue en cas d'incident technique.

En particulier, un découpleur trouve son application dans les moteurs aéronautiques de type turbofan. Dans ce cas particulier, les brides du découpleur qui ont une symétrie de révolution servent de liaison entre la partie fan avant et le support de palier de roulement sur l'arbre central.

La liaison fusible mise en place par la fixation de vis/écrous est conçue pour se rompre en cas de panne moteur consécutive notamment à un bris d'aube générant des efforts radiaux extrêmement importants. Cette rupture est destinée à éviter la destruction de la partie avant du compresseur par déformation inertielle.

Le découplage par rupture d'éléments de fixation a pour inconvénient majeur de générer la perte de morceaux de vis ou d'écrous qui ne sont plus maintenus en place et qui peuvent dès lors se déplacer librement dans l'enceinte de palier et entrer en contact avec des pièces tournantes, ce qui entraîne un risque majeur d'éjection violente avec perforation éventuelle des carters.

L'état de la technique à ce jour ne fournit aucune solution acceptable pour pallier ce risque de casse moteur dû à la non-rétention de débris produits dans le cadre de cette technologie récente de découpleur.

### Buts de l'invention

La présente invention vise à fournir une solution qui permette de s'affranchir des inconvénients de l'état de la technique.

En particulier, l'invention vise à fournir une solution qui permette de solidariser entre eux les morceaux des éléments de fixation et leur bride pour ne plus avoir de débris en libre mouvement dans l'enceinte comprenant les pièces en rotation.

### Principaux éléments caractéristiques de l'invention

La présente invention se rapporte à un dispositif découpleur de préférence destiné à équiper un moteur aéronautique comprenant au moins deux brides solidarisées par une pluralité d'éléments de fixation, lesdites brides constituant, avec l'ensemble des éléments de fixation, une ou des liaisons fusibles, lesdites liaisons fusibles étant conçues pour se rompre si les efforts radiaux exercés sur les brides dépassent un certain seuil, caractérisé en ce que les éléments de fixation sont noyés dans des matrices, de préférence en polymère ou élastomère, disposées à l'extrémité de chaque bride par rapport à la liaison.

Avantageusement, lesdites brides possèdent une symétrie de révolution et la ou les matrices présentent une forme annulaire.

De préférence, les éléments de fixation pour solidariser les brides peuvent être des boulons ou des rivets.

De manière particulièrement préférée, la matrice est en silicone.

L'invention se rapporte en outre à un procédé de découplage mettant en oeuvre un découpleur constitué d'au moins deux brides assemblées par une pluralité d'éléments de fixation, caractérisé en ce que, au cas où la rupture de la liaison entre les brides se produit, les éléments de fixation solidarisant initialement lesdites brides se retrouvent sous forme de débris incorporés dans les matrices restant solidaires de l'une ou l'autre bride.

Enfin, l'invention se rapporte à l'utilisation du dispositif tel que décrit ci-dessus, en guise de liaison fusible dans une machine tournante, de préférence une turbine, un turboréacteur, un turbopropulseur ou un turbocompresseur.

### Brève description des figures

La figure 1 représente schématiquement une vue en coupe d'un assemblage de deux brides d'un découpleur de moteur aéronautique selon l'état de la technique.

La figure 2 représente schématiquement une vue en perspective d'un assemblage de deux brides d'un découpleur de moteur aéronautique selon la présente invention.

### Description d'une forme d'exécution préférée de l'invention

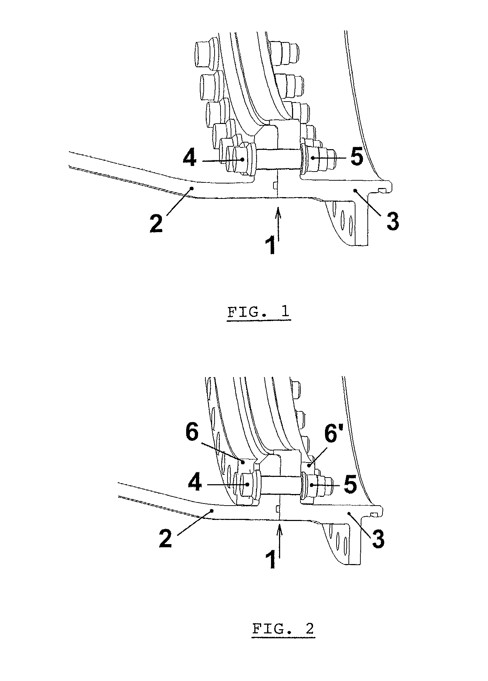

Comme représenté sur la figure 1, selon l'état de la technique, un découpleur 1 au sein d'un moteur de type turbofan est constitué de deux brides 2,3 à symétrie de révolution et constituant les liaisons fusibles. Ces brides sont solidarisées après assemblage par une pluralité de têtes de vis 4 et d'écrous 5.

Le principe à la base de l'invention, représentée sur la figure 2, consiste à noyer les têtes de vis 4 et les écrous 5 correspondants dans une matrice 6,6' en polymère injecté. Ainsi, lors d'une rupture éventuelle de la liaison fusible, les débris résultant des éléments de visserie 4,5 ne peuvent se désolidariser de chaque côté des brides de liaison 2,3. Suite à la symétrie de révolution des brides, les matrices polymères 6, 6' ont une forme annulaire.

En outre, on observe de manière avantageuse que ces matrices ont également un rôle d'amortisseur de choc après la rupture.

La présente invention présente donc les avantages suivants :
- suppression du risque de trouver des morceaux d'éléments de fixation se déplaçant librement dans l'enceinte de palier, parmi les pièces en rotation, après rupture du découpleur ;
- création d'une protection après montage pour la liaison sensible constituant le fusible.

## Revendications

1. Dispositif découpleur (1), de préférence destiné à équiper un moteur aéronautique, comprenant au moins deux brides (2,3) solidarisées par une pluralité d'éléments de fixation (4,4'), lesdites brides constituant, avec l'ensemble des éléments de fixation (4,4'), une ou des liaisons fusibles, lesdites liaisons fusibles étant conçues pour se rompre si les efforts radiaux exercés sur les brides (2,3) dépassent un certain seuil, **caractérisé en ce que** les éléments de fixation (4,4') des liaisons fusibles sont noyés dans des matrices (6,6'), de préférence en polymère ou élastomère, disposées à l'extrémité de chaque bride (2,3) par rapport à la liaison.

2. Dispositif selon la revendication 1, **caractérisé en ce que** les brides (2,3) possèdent une symétrie de révolution et **en ce que** la ou les matrices présentent une forme annulaire.

3. Dispositif selon la revendication 1 ou 2, **caractérisé en ce que** les éléments de fixation (4,4') pour solidariser les brides (2,3) sont des boulons.

4. Dispositif selon la revendication 1 ou 2, **caractérisé en ce que** les éléments de fixation (4,4') pour solidariser les brides (2,3) sont des rivets.

5. Dispositif selon l'une quelconque des revendications précédentes, **caractérisé en ce que** la matrice est en silicone.

6. Procédé de découplage mettant en oeuvre un découpleur constitué d'au moins deux brides assemblées par une pluralité d'éléments de fixation, selon l'une quelconque des revendications précédentes, **caractérisé en ce que**, au cas où la rupture de la liaison entre les brides se produit, les éléments de fixation solidarisant initialement lesdites brides se retrouvent sous forme de débris incorporés dans les matrices restant solidaires de l'une ou l'autre bride.

7. Utilisation d'un dispositif selon l'une quelconque des revendications 1 à 5, en guise de liaison fusible dans une machine tournante, de préférence une turbine, un turboréacteur, un turbopropulseur ou un turbocompresseur.

## Revendications modifiées

### Revendications modifiées conformément à la règle 86(2) CBE.

**1.** Procédé de découplage, de préférence dans un moteur aéronautique, mettant en oeuvre un dispositif (1), comprenant au moins deux brides (2,3) solidarisées par une pluralité d'éléments de fixation (4,5), lesdites brides constituant, avec l'ensemble des éléments de fixation (4,5), une ou plusieurs liaisons fusibles, lesdits éléments de fixation (4,5) étant noyés dans des matrices (6,6'), de préférence en polymère ou élastomère, disposées à l'extrémité de chaque bride (2,3) par rapport à la liaison, **caractérisé en ce que**, au cas où la rupture de la liaison entre les brides se produit, les éléments de fixation (4,5) solidarisant initialement lesdites brides se retrouvent sous forme de débris incorporés dans lesdites matrices (6,6') restant solidaires de l'une ou l'autre bride.

**2.** Dispositif découpleur (1) pour la mise en oeuvre du procédé de la revendication 1, comprenant au moins deux brides (2,3) solidarisées par une pluralité d'éléments de fixation (4,5) de manière à constituer une ou plusieurs liaisons fusibles, lesdites liaisons fusibles étant conçues pour se rompre lorsque les efforts radiaux exercés sur les brides (2,3) dépassent un certain seuil, caractérisé ce que lesdits éléments de fixation (4,5) sont noyés dans des matrices (6,6') en polymère ou élastomère, de préférence en silicone, disposées à l'extrémité de chaque bride (2,3) par rapport à la liaison, de manière à ce que, en cas de rupture, les débris des éléments de fixation restent incorporés dans lesdites matrices (6,6') restant solidaires de l'une ou l'autre bride.

**3.** Dispositif découpleur selon la revendication 2, **caractérisé en ce que** les brides (2,3) possèdent une symétrie de révolution et **en ce que** la ou les matrices présentent une forme annulaire.

**4.** Dispositif découpleur selon la revendication 2 ou 3, **caractérisé en ce que** les éléments de fixation (4,5) pour solidariser les brides (2,3) sont des boulons.

**5.** Dispositif selon la revendication 2 ou 3, **caractérisé en ce que** les éléments de fixation (4,5) pour solidariser les brides (2,3) sont des rivets.

**6.** Utilisation d'un dispositif selon l'une quelconque des revendications 2 à 5, en guise de liaison fusible dans une machine tournante, de préférence une turbine, un turboréacteur, un turbopropulseur ou un turbocompresseur.
